# EUROPEAN PATENT SPECIFICATION

(11) **EP 2 177 493 B1**
(45) Date of publication and mention of the grant of the patent: **08.05.2013**
(21) Application number: 08776994.9
(22) Date of filing: 29.05.2008
(51) Int. Cl.: C04B 37/00, B01D 39/20, F01N 3/02

(54) **METHOD OF PRODUCING HONEYCOMB SEGMENT WITH SPACERS**
VERFAHREN ZUR HERSTELLUNG VON WABENSEGMENT MIT ABSTANDHALTERN
PROCÉDÉ DE FABRICATION D'UN SEGMENT EN NID D'ABEILLES AVEC DES ESPACEURS

(30) Priority: 07.08.2007 JP 2007205431
(43) Date of publication of application: 21.04.2010
(73) Proprietor: NGK Insulators, Ltd., Nagoya-shi, Aichi 467-8530 (JP)
(72) Inventor: SHIMODA, Kenjiro, Nagoya-shi Aichi 467-8530 (JP); INOUE, Jun, Nagoya-shi Aichi 467-8530 (JP)
(74) Representative: Paget, Hugh Charles Edward
(86) International application number: PCT/JP2008/059932
(87) International publication number: WO 2009/019927

(56) References cited:
- JP-A- 2004 262 669
- JP-A- 2004 283 669
- US-A- 5 817 210

## Description

### Technical Field

The present invention relates to: a method of producing a honeycomb segment with spacers constituting a honeycomb structure being used as a carrier for an internal combustion engine, a boiler, a chemical reactor, fuel cell reformer, or the like, or as a filter for trapping particulate matter in exhaust gas, or the like; and a spacer-forming device for forming spacers on a honeycomb segment.

### Background Art

A honeycomb structure is widely used as a trapping filter for exhaust gas for the sake of environmental improvement, pollution prevention, and the like. Currently, for example, an SiC DPF (diesel particulate filter) is produced by unitarily joining 16 substrates (honeycomb segments) divided for preventing cracks due to thermal shock, with a bonding material (ceramic cement), (for example, refer to Patent Document 1). However, there arises a problem of having cracks in a portion having low characteristics upon a thermal resistance test because of variance in characteristics due to variance in thickness (bonding width) of a bonding layer.

Therefore, there has been disclosed a technique of bonding honeycomb segments using "spacers" in order to stabilize thickness of the bonding layer (for example, refer to Patent Document 2).

| | |
|---|---|
| [Patent Document 1] | JP-A-2000-7455 |
| [Patent Document 2] | J-P-A-2002-102627 |

However, when a segment has a bent shape in this method, there remains variance in bonding width in the end face, and thereby an opening ratio of the honeycomb structure also has variance.

The present invention aims to provide a honeycomb segment with spacers, capable of allowing a bonding layer between honeycomb segments to have desired thickness, and forming a honeycomb structure having little dimensional error; a method of producing such a honeycomb segment; a honeycomb structure; and a spacer forming device for producing a honeycomb segment with spacers.

### Disclosure of the Invention

The present inventors found out that the above problems can be solved by forming spacers on an outer peripheral surface of a honeycomb segment using the height, as the reference, from an outer peripheral surface of an outer peripheral wall at positions of both end faces of one end side and the other end side in an axial direction of the honeycomb segment. That is, according to the present invention, there are provided the following honeycomb segment with spacers, method of producing the same, honeycomb structure, and spacer-forming device.

[1] A method of producing honeycomb segment with spacers, comprising the steps of: applying unsolidified spacer-forming materials to form spacers to an outer peripheral surface of an outer peripheral wall from one end side of positions of both inner end faces in an axial direction toward inside along the axial direction of a honeycomb segment, and to an outer peripheral surface of the outer peripheral wall from the other end side in the axial direction toward inside along the axial direction of the honeycomb segment, the honeycomb segment having a plurality of cells defined by porous partition walls, extending in the axial direction, and functioning as fluid passages; and then solidifying the spacer-forming material to form the spacers in a predetermined height, using, as a reference, a height from the outer peripheral surface of the outer peripheral wall at the positions of both end faces of the one end side and the other end side in the axial direction.

[2] The method of producing honeycomb segment with spacers according to [1], further comprising the steps of: after applying the spacer-forming material, pressing a height reference jig representing the reference height from the outer peripheral surface against the outer peripheral surface of the outer peripheral wall at positions of the both end faces of the one end side and the other end side in the axial direction; and pressing a heating device against the spacer-forming material using the reference height of the height reference jig as the reference to solidify the spacer-forming material, in a thermally non-contact state with the height reference jig, thereby forming the spacers in a predetermined height.

[3] The method of producing honeycomb segment with spacers according to [2], further comprising the step of: after pressing the height reference jig against the outer peripheral surface, pressing the heating device against the spacer-forming material so that an end face of the height reference jig on a side opposing the outer peripheral surface side and an end face of the heating device on a side opposing the outer peripheral surface side are flush with each other.

[4] A spacer-forming device for forming spacers on a honeycomb segment, comprising: a height reference jig having a length corresponding to a length in an axial direction of the honeycomb segment on which spacers are to be formed, the honeycomb segment having a plurality of cells defined by porous partition walls, extending in the axial direction, and functioning as fluid passages, the height reference jig having a predetermined reference height, and being suitable for pressing against an outer peripheral surface of an outer peripheral wall of the honeycomb segment at positions of both end faces of one end side and the other end side in the axial direction thereof; and a heating device located at a position from the height reference jig toward inside along the axial direction in a thermally non-contact state with the height reference jig, being suitable for processing against unsolidified spacer-forming materials applied to the outer peripheral surface of the honeycomb segment using the reference height of the height reference jig as the reference, and thus solidifying the spacer-forming materials.

[5] The spacer-forming device according to [4], wherein the heating device includes: a heating part heating the spacer-forming material; and a heat insulating part integrated with the heating part, being located between the heating part and the height reference jig, and preventing the heat of the heating part from being conducted to the height reference jig.

[6] The spacer-forming device according to [5], wherein the heat insulating part contacts an inner surface of the height reference jig to allow the heating device to slide along the inner surface of the height reference jig.

Even when the outer peripheral wall of the honeycomb segment is in a bent shape, the spacers can be formed in an aligned height each other, thus forming the bonding layers at a uniform thickness to stack the honeycomb segments, thereby producing the honeycomb structure by the steps of: applying the unsolidified spacer-forming material to the outer peripheral surface of the honeycomb segment; and forming the spacers with their heights aligned in a fixed value from the outer peripheral surface of the outer peripheral wall at the positions of end faces.

By the above method, the width of bonding layer (bonding width) at the end face can be uniformized independent of the shape of honeycomb segment, thus allowing the opening ratio as the honeycomb structure to keep constant, and the performance such as pressure loss to uniformize. In addition, since the variance in bonding width can be reduced, the difference in life of individual segments becomes small, and there is attained the production of honeycomb structure that functions stably over a long period. Furthermore, constant bonding width makes the heat transfer close to a uniform state, thus diminishing various deterioration causes such as thermal stress, expected to arise during practical use period. Above measures realizes the production of honeycomb structure that prevents local deterioration and assures long period of stable functioning.

### Brief Description of the Drawings

Fig. 1 shows a perspective view illustrating a honeycomb segment with spacers.
Fig. 2 shows a perspective view illustrating a honeycomb structure formed by stacking the honeycomb segments with spacers.
Fig. 3 shows a schematic drawing illustrating the formation of a spacer.
Fig. 4 shows another schematic drawing illustrating the formation of a spacer.
Fig. 5 shows a schematic drawing illustrating the stacking of honeycomb segments with spacers.
Fig. 6 shows a schematic drawing illustrating a combination of honeycomb segments with spacers.
Fig. 7 shows a schematic drawing illustrating the thermal contact between a heating device and a height reference jig.
Fig. 8 shows a schematic drawing illustrating the case of forming the spacer using an inner position of the end face as the reference.
Fig. 9 is a graph showing the variance of bonding width.
Fig. 10 is a graph showing the temperature at the generation of cracks.

### Description of the Reference Symbols

1:Honeycomb structure, 1a:Bonded honeycomb segments, 2:Partition wall, 3:Cell, 5:Bonding layer, 7:Outer peripheral wall, 7s:Outer peripheral surface, 8:End face, 10:Honeycomb segment, 11:Spacer, 15:Masktape, 20:Vertical backing plate, 21:Horizontal backing plate, 30:Spacer-forming device, 31:Heating device, 31a:Heating part, 31b:Heat insulating part, 31s:End face, 32:Height reference jig, 32s:End face, 32u:Inner surface

### Description of the Preferred Embodiment

The preferred embodiments of the present invention will be described below referring to the drawings. The present invention is by no means limited to these embodiments, and various kinds of change, modification, and improvement may be added as long as they do not deviate from the scope of the present invention.

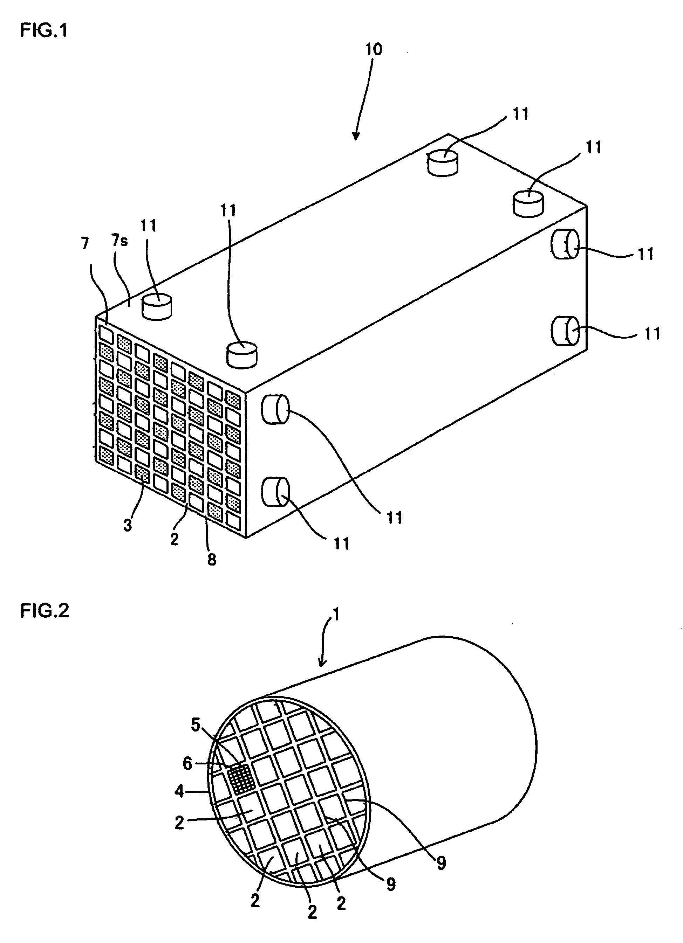

Fig. 1 illustrates a honeycomb segment 10 having spacers 11 formed thereon. The honeycomb segment 10 is formed of ceramic, and has outer peripheral walls 7, partition walls 2 formed inside the outer peripheral walls 7, and a plurality of cells 3 partitioned by the partition walls 2. The spacers 11 are formed on the outer peripheral surface 7s of the outer peripheral wall 7 of the honeycomb segment 10. By bonding a plurality of the honeycomb segments 10, a honeycomb structure 1 illustrated in Fig. 2 is obtained.

The honeycomb segment 10 with spacers, illustrated in Fig. 1, has the plurality of cells 3 defined by the porous partition walls 2, extending in the axial direction, and functioning as the fluid passages. When the honeycomb structure 1 formed by bonding the honeycomb segments 10 is used as a filter, it is preferable that a part of the cells 3 are plugged at an end face 8 of the honeycomb segment 10 as illustrated in Fig. 1. Specifically, it is preferable that the adjacent cells 3 are alternately plugged at the end faces 8 opposite to each other, and that each of the end faces 8 is plugged in a checkered pattern. With that type of plugging, for example, the target fluid to be treated enters from one end face 8 passes through the partition wall 2 and flows out from other end face 8. When the fluid to be treated passes through the partition wall 2, the porous partition wall 2 plays a role of filter to remove the target substance.

The honeycomb segment 10 has the spacers 11 being located at positions of both inner end faces of one end side and the other end side in the axial direction of the outer peripheral surface 7s of the outer peripheral wall 7 thereof, in an aligned predetermined height from the outer peripheral surface 7s of the outer peripheral wall 7 at positions of both end faces of one end side and the other end side in the axial direction. Since the spacers 11 are formed using the height, as the reference, from the outer peripheral surface 7s of the outer peripheral wall 7 at positions of both end faces, the spacers 11 are formed in an aligned predetermined height each other. As a result, on stacking the honeycomb segments 10, the spacers 11 allow forming the bonding width at a uniform value. Specifically, as described below, applying a spacer-forming material having flowability and using a spacer-forming device 30 equipped with a height reference jig 32, it becomes possible to form the spacers 11 at a uniform height. Also for the case that the segment is in a bent shape, to prevent dispersion of the bonding width at the end face 8 and to prevent variance in opening ratio as the honeycomb structure, the height reference jig 32 is pressed against the positions of the respective end faces of the outer peripheral surface 7s of the honeycomb segment 10, thus forming the spacers 11 using the height, as the reference, from the outer peripheral surface 7s at the end face 8.

In the present invention, the honeycomb segment 10 can be formed of a ceramic material. It is, however, preferable that, from the viewpoints of strength, heat resistance, and the like, the ceramic is selected from the group consisting of cordierite, SiC, alumina, mullite, silicon nitride, zirconium phosphate, aluminum titanate, zirconia, titania, and a combination thereof. Alternatively, the honeycomb segment 10 can be formed by a material containing any of Fe-Cr-Al-based metal, nickel-basedmetal, metal silicon (Si), and silicon carbide (SiC).

When a honeycomb segment bonded body 1a (honeycomb structure 1) of the present invention is used for DPF, it is preferable to use silicon carbide or silicon-silicon carbide-based composite phase in view of high heat resistance, and it is preferable to use cordierite because of low thermal expansion coefficient and good resistance to thermal shock. In the present invention, if the honeycomb segment bonded body 1a is formed of metal silicon (Si) and silicon carbide (SiC), excessively small Si content defined by Si/(Si + SiC) of the honeycomb segment bonded body 1a fails to attain the effect of Si addition, thus resulting in poor strength, and exceeding 50% by mass of Si content fails to attain the effect of heat resistance and of high thermal conductivity as the characteristics of SiC. The Si content is preferably in a range from 5 to 50% by mass, and more preferably in a range from 10 to 40% by mass.

To the above raw material, there are added a binder such as methylcellulose and hydroxypropoxyl methylcellulose, an organic pore former, a surfactant, water, and the like to prepare a plastic clay. Thus prepared clay is subjected to, for example, extrusion-forming to form a honeycomb formed body in a shape of quadrangular prism having a plurality of cells 3 partitioned by the partition walls 2 each other while penetrating therethrough in the axial direction thereof. The honeycomb formed body is dried by, for example, microwaves and hot air, and then is calcinated to remove the binder and the organic pore former, followed by firing to produce the honeycomb segment 10.

In addition, the plugging portions in the case that the cells 3 are plugged at the end face 8 preferably contain at least one kind of crystal phase as the main crystal phase, selected from the group consisting of the substances described above as suitable ones for the main crystal phase of the partition wall 2, and more preferably contain the crystal phase of similar kind to the main crystal phase of the honeycomb segment 10 as the main crystal phase.

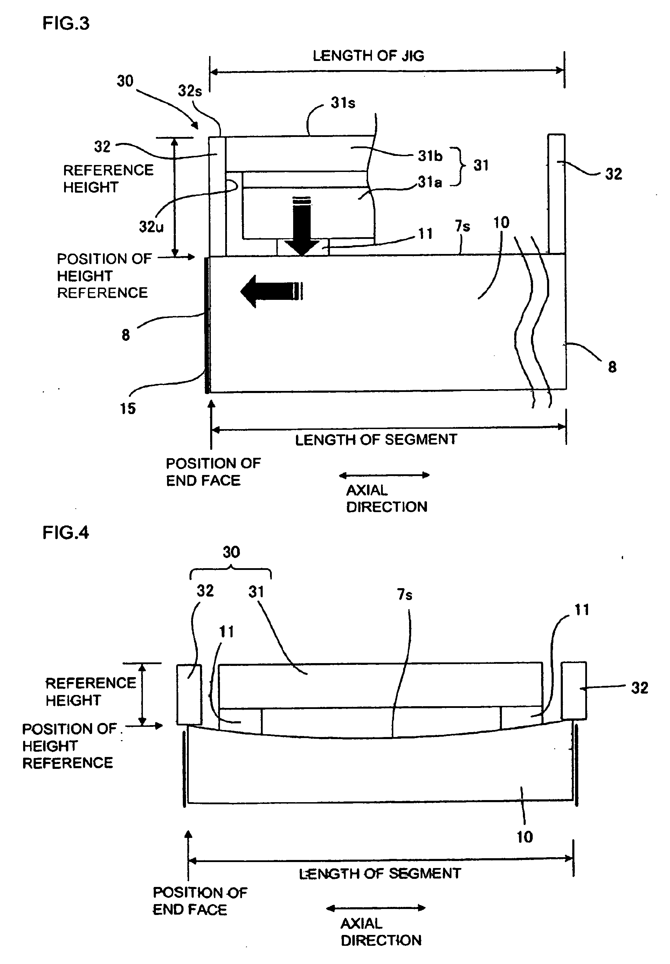

Next, referring to Figs. 3 to 6, there are described the method of producing honeycomb segment 10 with spacers, the honeycomb segment bonded body 1a formed by bonding the honeycomb segment 10 with spacers, and the method of producing honeycomb structure 1.

First, the honeycomb segment before forming the spacers 11 is produced by the following steps. As the raw material powder of honeycomb segment, one of above-described preferred materials such as silicon carbide powder is applied. To the silicon carbide powder, there is added a binder such as methylcellulose and hydroxypropoxyl methylcellulose, and further a surfactant and water, thus preparing a plastic clay. The clay is subjected to, for example, extrusion-forming to form a honeycomb segment (in a state of without spacers 11) as shown, for example, in Fig. 1. That is, there is formed the honeycomb segment 10 having a plurality of cells 3 defined by the plurality of porous partition walls 2, extending in the axial direction, and functioning as the fluid passages.

The plurality of honeycomb segments 10 are dried by, for example, microwaves and hot air. Then, to the end face 8 of the honeycomb segment 10, a clogging-inhibition tape (mask tape 15) is attached to inhibit clogging of the cells 3 caused by the bonding material. By applying a spacer-forming material having, for example, the same composition as that of the clay to the outer peripheral surface 7s, the spacer 11 as illustrated in Fig. 3 is formed. Specifically, the unsolidified spacer-forming material to form the spacers 11 is applied to the positions of both inner end faces of one end side and the other end side in the axial direction of the outer peripheral surface 7s of the outer peripheral wall 7 of the honeycomb segment 10, and then the spacer-forming material is solidified using the height, as the reference, from the outer peripheral surface 7s of the outer peripheral wall 7 at positions of both end faces of one end side and the other end side in the axial direction.

In this step, a spacer-forming device 30 described below is used. The spacer-forming device 30 has: the height reference jig 32 having a length corresponding to the length of the honeycomb segment 10 in the axial direction thereof and having a predetermined reference height, and being pressed against the positions of both end faces of one end side and the other end side in the axial direction of the outer peripheral surface 7s of the outer peripheral wall 7 of the honeycomb segment 10; and the heating device 31 located at an inner position of the height reference jig 32 in the axial direction thereof in a thermally non-contact state with the height reference jig 32, being pressed against the unsolidified spacer-forming material applied to the outer peripheral surface 7s of the honeycomb segment 10 using the reference height of the height reference jig 32 as the reference, thus solidifying the spacer-forming material. The height reference jig 32 has such a length to allow pressing thereof against the outer peripheral surface 7s at positions of both end faces in the axial direction thereof, and has a length almost equal to the length of the honeycomb segment 10 in the axial direction thereof. The heating device 31 has a heating part 31a heating the spacer-forming material, and a heat insulating part 31b integrated with the heating part 31a and being located between the heating part 31a and the height reference jig 32, thus preventing the heat of the heating part 31a from being conducted to the height reference jig 32. Furthermore, the heat insulating part 31b contacts an inner surface 32u of the height reference jig 32 to allow the heating device 31 to slide along the inner surface 32u of the height reference jig 32.

After applying the spacer-forming material, the height reference jig 32 representing the reference height from the outer peripheral surface 7s is pressed against the outer peripheral surface 7s of the outer peripheral wall 7 at positions of both end faces of one end side and the other end side in the axial direction, and the heating device 31 is pressed against the spacer-forming material in a thermally non-contact state with the height reference jig 32 using the reference height from the height reference jig 32 as the reference, thus solidifying the spacer-forming material. That is, after pressing the height reference jig 32 against the outer peripheral surface 7s, the heating device 31 is pressed against the spacer-forming material so that an end face 8 on a side opposing the outer peripheral surface 7s side of the height reference jig 32 and an end face 8 on a side opposing the outer peripheral surface 7s side of the heating device 31 are flush with each other. Thus the spacers 11 can be formed at a predetermined height using the reference height of the height reference jig 32 as the reference.

The heat from the heating part 31a is transferred from the spacer-forming material to the honeycomb segment 10. However, the thermal conductivity therebetween is small, and by thermally isolating the height reference jig 32 from the heating part 31a, the heat is not transferred from the height reference jig 32 to the mask tape 15 at the end face 8 of the honeycomb segment 10, thereby preventing the mask tape 15 from peeling caused by heat. In addition, by structuring the heating part 31a and the heat insulating part 31b using a material hardly affected by thermal expansion, and by forming the spacers 11 based on the end-face reference, there can be formed the spacers 11 at a uniform height and can be produced the honeycomb segment bonded body 1a having a uniform bonding width independent of the segment shape. As a result, the width of the bonding layer 5 on the end face 8 can be uniformized, and the opening ratio as the honeycomb structure 1 can be kept constant, thereby achieving uniform performance.

Furthermore, there can be used a spacer-forming device 30 illustrated in Fig. 4, having: the height reference jig 32 having a length almost equal to that of the honeycomb segment 10 in the axial direction thereof and having a predetermined reference height, and being pressed against the positions of both end faces of one end side and the other end side in the axial direction of the outer peripheral surface 7s of the outer peripheral wall 7 of the honeycomb segment 10; and the heating device 31 located at an inner position of the height reference jig 32 in the axial direction thereof in a thermally non-contact state with the height reference jig 32 by keeping a gap therebetween, being pressed against the spacer-forming material applied to the outer peripheral surface 7s of the honeycomb segment 10 using the reference height of the height reference jig 32 as the reference, thus solidifying the spacer-forming material.

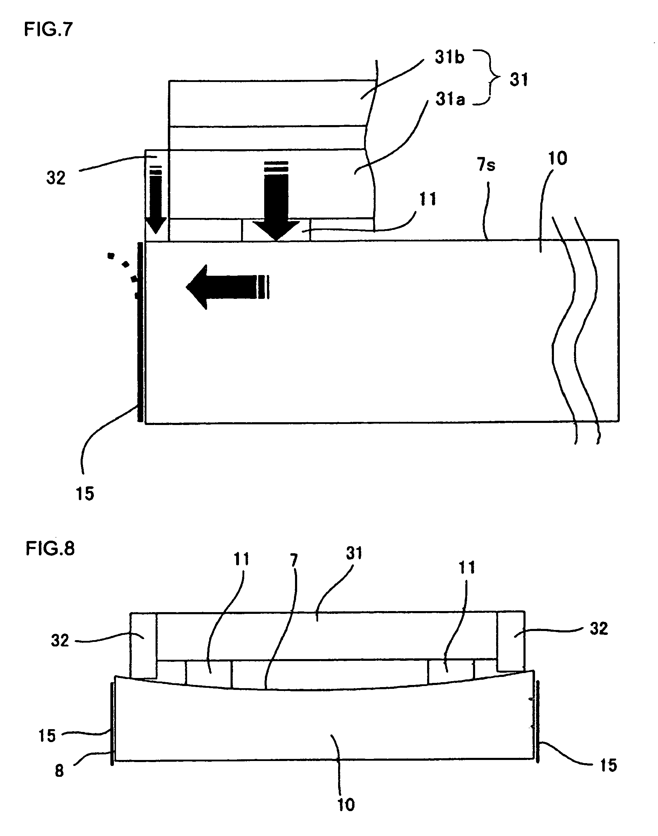

In contrast, as illustrated in Fig. 7, even when the height from the outer peripheral surface 7s of the outer peripheral wall 7 at the end face 8 is adopted as the reference, if the height reference jig 32 and the heating part 31a thermally contact with each other, the heat from the heating part 31a is likely transferred from the height reference jig 32 to the mask tape 15, which is unfavorable because the mask tape 15 is peeled off. It is therefore necessary that the heating part 31a and the height reference jig 32 are in a thermally non-contact state with each other.

As illustrated in Fig. 8, if the height reference jig 32 is located at an inner position of the end face 8 in the axial direction thereof to prevent the peeling of the mask tape 15, the height of spacers 11 does not become uniform owing to the shape of the outer peripheral wall 7, which is not favorable because there occurs variance in the thickness of bonding layer 5 of the honeycomb structure 1.

Consequently, it is preferable that, as illustrated in Fig. 3 and Fig. 4, the spacers 11 are formed using the height, as the reference, from the outer peripheral surface 7s of the outer peripheral wall 7 at the position of end face, in a state that the heating part 31a is not thermally contacted with the height reference jig 32. By forming the spacers 11 in this manner, there can be formed the spacers 11 having uniform height from the outer peripheral surface 7s of the outer peripheral wall 7 at the positions of end faces in the axial direction. That is, even when the shape of the outer peripheral surface 7s of the honeycomb segment 10 is deformed, since the height of spacers 11 is uniformized, honeycomb segments 10 can be bonded together while uniformizing the thickness of bonding layer 5 of the honeycombs segment 10 owing to the uniform height of the spacers 11, thus allowing producing the honeycomb structure.

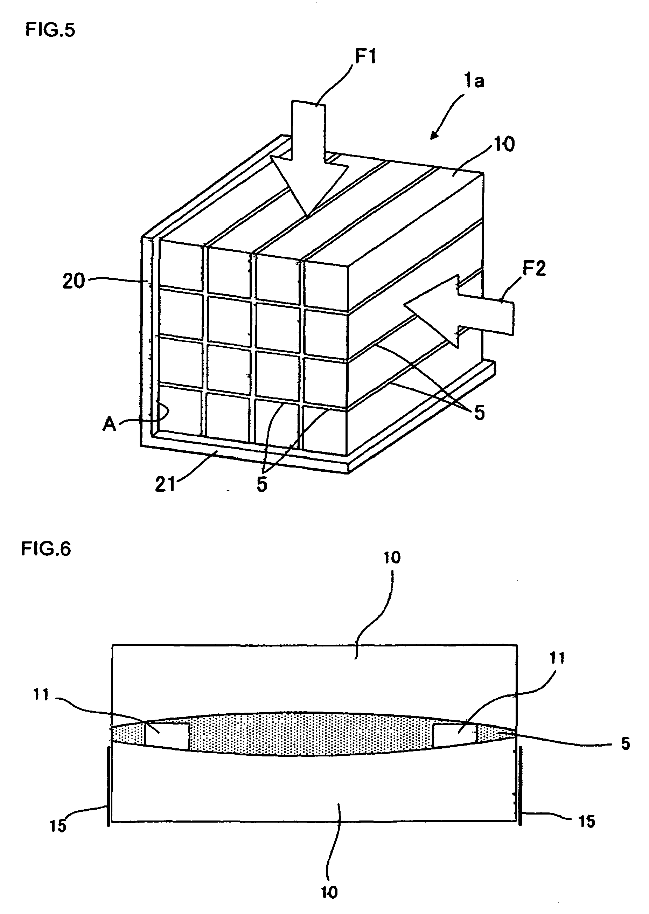

Fig. 5 illustrates the bonding method of the joined honeycomb segment bonded body 1a. The honeycomb segment bonded body 1a is structured by bundling a plurality of ceramic porous honeycomb segments 10 having many cells 3 being partitioned by the partition walls 2 and penetrating therethrough in the axial direction thereof via the respective bonding layers 5.

Specifically, as illustrated in Fig. 5, within a containing area A being formed by a vertical support plate 20 and a horizontal support plate 21 into an L-shape cross section, the respective honeycomb segments 10 are stacked with the respective outer peripheral walls 7 functioning as bonding surfaces while placing the respective bonding layers 5 between the bonding surfaces. The stacking is conducted so that the two surfaces face the vertical backing plate 20 and the horizontal backing plate 21, respectively.

The bonding material of the bonding layer 5 includes inorganic particles and inorganic adhesive as the main components, and includes organic binder, surfactant, foamed resin, water, and the like as the auxiliary components. As the inorganic particles, plate-like particles, spherical particles, granular particles, fibrous particles, needle particles, and the like, can be used. As the inorganic adhesive, colloidal silica (SiO₂ sol), colloidal alumina (alumina sol), various oxide sols, ethylsilicate, water glass, silica polymer, aluminum phosphate, and the like, can be used. A main component preferably contains ceramic powder common to a structural component of the honeycomb segment 10, and from the point of health, a main component is preferably the one not containing fibrous particles such as ceramic fiber, and containing plate-like particles. Examples of applicable plate-like particles are mica, talc, boron nitride, and glass flake. By attaching the bonding material to the bonding surface of the honeycomb segment 10, the bonding layer 5 can be formed. Forming the bonding layer 5 may be conducted onto the honeycomb segment 10 before stacking, or may be conducted onto the exposed bonding surface of the honeycomb segment 10 already stacked. The stacking is conducted by piling up the honeycomb segments 10 one by one.

In the stacking step, as for the honeycomb segment 10 having spacers 11 being aligned in their height to the reference height at the positions of the respective end faces, the bonding layers 5 can be formed at a uniform width, as illustrated in Fig. 6, by mating a surface of the honeycomb segment 10 with a surface of other honeycomb segment 10 not forming the spacers 11 thereon.

Next, as illustrated in Fig. 5, after stacking a predetermined number of the honeycomb segments 10 (16 segments in this embodiment), the entire honeycomb segments 10 are subjected to full scale pressing in the directions of arrow F1 and arrow F2 simultaneously via the honeycomb segments 10 at the most outer layer. Since the two surfaces of the stacked body are covered by the vertical backing plate 20 and the horizontal backing plate 21, the full scale pressing is given to entire other two surfaces in the directions of arrow F1 and arrow F2 simultaneously. The power for the pressing is given by air cylinder, hydraulic cylinder, or the like.

Through the above procedure, a plurality of the honeycomb segments 10 are bundled via the respective bonding layers 5, thus forming the honeycomb segment bonded body 1a. By removing a part of the outer periphery of the honeycomb segment bonded body 1a and by applying a coating material, the honeycomb structure 1 is produced. On drying the honeycomb structure 1, the mask tape 15 attached to the end faces 8 on bonding the honeycomb segments 10 is peeled off so as not to delay the drying of the end faces 8.

### Examples

The present invention will be described in more detail in the following referring to the examples. The present invention, however, is not limited to these examples.

### (Examples)

By applying the production method of the present invention (end face-reference solidification method: refer to Fig. 3), honeycomb segments were stacked to form 6 rows and 6 columns, thus producing an SiC-DPF (2.5 liter of capacity, 12 mil of partition wall thickness, and 300 cpsi of cell density) having 25 µm of average pore diameter and 58% of porosity. The spacers formed for stacking the segments used a ceramic adhesive (spacer-forming material) composed of SiC as the main material (40% by mass), ceramic fiber (60% by mass), and additives of pore former, surfactant, and water at 12% by mass to the sum of the SiC and ceramic fiber. The spacer-forming material was solidified by heating at 180°C for 45 seconds to form the spacers each having 1.0 mm of designed thickness (bonding width).

### (Comparative Examples)

With the conventional production method (conventional solidification method: refer to Fig. 8), honeycomb segments were stacked to form 6 rows and 6 columns, thus producing an SiC-DPF (2.5 liter of capacity, 12 mil of partition wall thickness, and 300 cpsi of cell density) having 25 µm of average pore diameter and 58% of porosity. The material to form spacers (spacer-forming material) was the same as that in Example.

### (Evaluation 1)

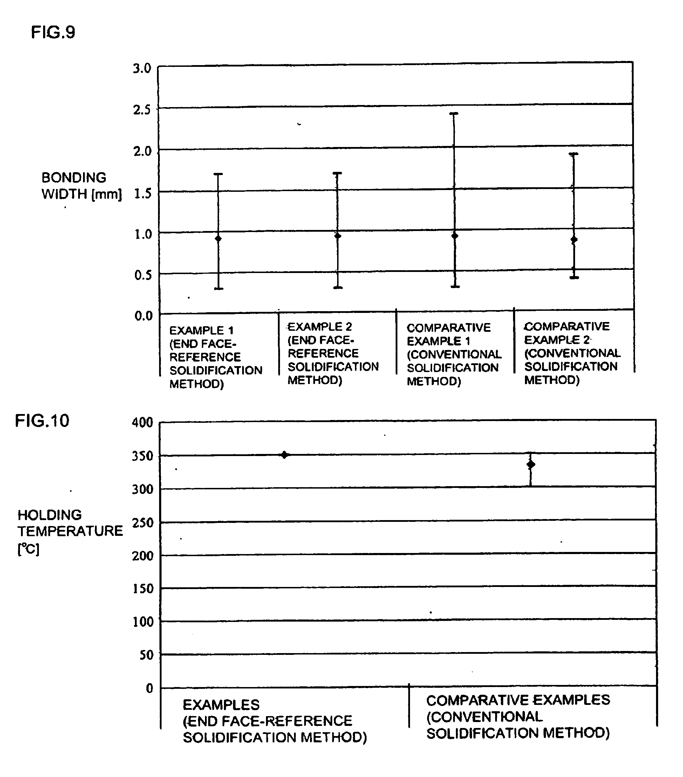

With two units of commercial production machines, the wall flow type SiC-DPF samples were produced by each of the end face-reference solidification method (Examples) and the conventional solidification method (Comparative Examples). The variance of bonding width at end faces of the samples prepared by the respective methods was evaluated. Fig. 9 shows the evaluation result. The graph shows the average value, the maximum value, and the minimum value of the bonding width at end faces. It is to be noted that Example 1 and Example 2, and Comparative Example 1 and Comparative Example 2 gave data acquired from the respective different lots.

As seen in Fig. 9, the variance of bonding width significantly decreased in Examples (end face-reference solidification method) compared with that in Comparative Examples (conventional solidification method).

### (Evaluation 2)

Evaluation of diminishing the deterioration causes was given by the following steps. The wall flow type SiC-DPF in each of Examples and Comparative Examples was heated in an electric furnace. After soaking the sample, the sample was taken out from the electric furnace to confirm the presence/absence of crack. The temperature at crack generation was compared between samples. Since the measurement was accompanied with variance, each 6 samples were evaluated for Examples and Comparative Examples. Fig. 10 shows the evaluation result. The vertical axis of Fig. 10 is the holding temperature of the electric furnace at the time of crack generation. Compared with Comparative Examples (conventional solidification method), Examples (end face-reference solidification method) improved the heat resistance temperature by about 10°C.

### Industrial Applicability

The present invention can be used as a carrier for an internal combustion engine, a boiler, a chemical reactor, fuel cell reformer, or the like, or a filter for trapping particulate matter in exhaust gas, and the present invention can be used as the method of producing honeycomb structure being composed of a plurality of honeycomb segments.

## Claims

1. A method of producing honeycomb segment (10) with spacers (11), comprising the steps of: applying unsolidified spacer-forming materials to form spacers (11) to an outer peripheral surface (7s) of an outer peripheral wall (7) from one end side of positions of both inner end faces (8) in an axial direction toward inside along the axial direction of a honeycomb segment (10), and to an outer peripheral surface (7s) of the outer peripheral wall (7) from the other end side in the axial direction toward inside along the axial direction of the honeycomb segment (10), the honeycomb segment (10) having a plurality of cells (3) defined by porous partition walls (2), extending in the axial direction, and functioning as fluid passages; and then solidifying said spacer-forming material to form said spacers (11) in a predetermined height, using, as a reference, a height from said outer peripheral surface (7s) of said outer peripheral wall (7) at said positions of both end faces (8) of said one end side and said the other end side in said axial direction.

2. The method of producing honeycomb segment (10) with spacers (11) according to claim 1, further comprising the steps of: after applying said spacer-forming materials, pressing a height reference jig (32) representing the reference height from said outer peripheral surface (7s) against said outer peripheral surface (7s) of said outer peripheral wall (7) at positions of said both end faces (8) of said one end side and said the other end side in said axial direction; and pressing a heating device (31) against said spacer-forming materials using said reference height of said height reference jig (32) as the reference to solidify said spacer-forming materials, in a thermally non-contact state with said height reference jig (32), thereby forming said spacers (11) in a predetermined height.

3. The method of producing honeycomb segment (10) with spacers (11) according to claim 2, further comprising the step of: after pressing said height reference jig (32) against said outer peripheral surface (7s), pressing said heating device (31) against said spacer-forming materials so that an end face (32s) of said height reference jig (32) on a side opposing said outer peripheral surface (7s) side and an end face (31s) of said heating device (31) on a side opposing said outer peripheral surface (7s) side are flush with each other.

4. A spacer-forming device (30) for forming spacers (11) on a honeycomb segment (10), comprising:
a height reference jig (32) having a length corresponding to a length in an axial direction of the honeycomb segment (10) on which spacers (11) are to be formed, the honeycomb segment (10) having a plurality of cells (3) defined by porous partition walls (2), extending in the axial direction, and functioning as fluid passages, the height reference jig (32) having a predetermined reference height, and being suitable for pressing against an outer peripheral surface (7s) of an outer peripheral wall (7) of said honeycomb segment (10) at positions of both end faces (8) of one end side and the other end side in the axial direction thereof; and
a heating device (31) located at a position from the height reference jig (32) toward inside along said axial direction in a thermally non-contact state with said height reference jig (32), being suitable for pressing against unsolidified spacer-forming materials applied to said outer peripheral surface (7s) of said honeycomb segment (10) using said reference height of said height reference jig (32) as the reference, and thus solidifying said spacer-forming materials.

5. The spacer-forming device (30) according to claim 4, wherein said heating device (31) includes: a heating part (31a) heating said spacer-forming material; and a heat insulating part (31b) integrated with the heating part (31a), being located between said heating part (31a) and said height reference jig (32), and preventing the heat of said heating part (31a) from being conducted to said height reference jig (32).

6. The spacer-forming device (30) according to claim 5, wherein said heat insulating part (31b) contacts an inner surface (32u) of said height reference jig (32) to allow said heating device (31) to slide along said inner surface (32u) of said height reference jig (32).

## Patentansprüche

1. Verfahren zur Herstellung eines Wabensegments (10) mit Distanzstücken (11), das folgende Schritte umfasst: das Aufbringen von unverfestigten Distanzstückmaterialien zur Ausbildung von Distanzstücken (11) auf eine Außenumfangsoberfläche (7s) einer Außenumfangswand (7) von einer Stirnseite von Positionen beider Innenstirnflächen (8) aus in axialer Richtung nach innen entlang der axialen Richtung des Wabensegments (10) und auf eine Außenumfangsoberfläche (7s) der Außenumfangswand (7) von der anderen Stirnseite aus in der axialen Richtung nach innen entlang der axialen Richtung des Wabensegments (10), wobei das Wabensegment (10) eine Vielzahl an durch poröse Trennwände (2) definierte Zellen (3) aufweist, die sich in axialer Richtung erstrecken und als Fluiddurchlässe fungieren; und anschließend das Verfestigen des Materials zur Ausbildung der Distanzstücke, um die Distanzstücke (11) mit vorbestimmter Höhe auszubilden, wobei als Referenz die Höhe der Außenumfangsoberfläche (7s) der Außenumfangswand (7) an den genannten Positionen der beiden Stirnflächen (8) der einen Stirnseite und der anderen Stirnseite in axialer Richtung herangezogen wird.

2. Verfahren zur Herstellung eines Wabensegments (10) mit Distanzstücken (11) nach Anspruch 1, das ferner folgende Schritte umfasst: Nach dem Aufbringen der Materialien zur Ausbildung der Distanzstücke wird ein Höhenreferenzschablone (32), die die Referenzhöhe der Außenumfangsoberfläche (7s) repräsentiert, an den Positionen der beiden Stirnflächen (8) der einen Stirnseite und der anderen Stirnseite in axialer Richtung gegen die Außenumfangsoberfläche (7s) der Außenumfangswand (7) gedrückt; und eine Erwärmungsvorrichtung (31) wird auf die Materialien zur Ausbildung der Distanzstücke gedrückt, wobei die Referenzhöhe der Höhenreferenzschablone (32) als Referenz verwendet wird, um die Materialien zur Ausbildung der Distanzstücke zu verfestigen, wobei kein thermischer Kontakt mit der Höhenreferenzschablone (32) besteht, wodurch die Distanzstücke (11) mit vorbestimmter Höhe ausgebildet werden.

3. Verfahren zur Herstellung eines Wabensegments (10) mit Distanzstücken (11) nach Anspruch 2, das ferner folgenden Schritt umfasst: Nach dem Aufdrücken der Höhenreferenzschablone (32) auf die Außenumfangsoberfläche (7s) wird die Erwärmungsvorrichtung (31) auf die Materialien zur Ausbildung der Distanzstücke gedrückt, so dass eine Stirnfläche (32s) der Höhenreferenzschablone (32) an einer der Seite der Außenumfangsoberfläche (7s) entgegengesetzten Seite und eine Stirnfläche (31 s) der Erwärmungsvorrichtung (31) an einer der Außenumfangsoberfläche (7s) entgegengesetzten Seite bündig ausgerichtet sind.

4. Vorrichtung (30) zur Ausbildung von Distanzstücken (11) an einem Wabensegment (10), wobei die Vorrichtung Folgendes umfasst:
eine Höhenreferenzschablone (32) mit einer Länge, die der Länge des Wabensegments (10), an dem Distanzstücke (11) ausgebildet werden sollen, in axialer Richtung entspricht, wobei das Wabensegment (10) eine Vielzahl von Zellen (3) aufweist, die durch poröse Trennwände (2) definiert sind, sich in axialer Richtung erstrecken und als Fluiddurchlässe fungieren, wobei die Höhenreferenzschablone (32) eine vorbestimmte Referenzhöhe aufweist und geeignet ist, um an Positionen beider Stirnflächen (8) an einer Stirnseite und der anderen Stirnseite in axialer Richtung des Wabensegments (10) gegen die Außenumfangsoberfläche (7s) einer Außenumfangswand (7) des Wabensegments (10) gedrückt zu werden; und
eine Erwärmungsvorrichtung (31), die an einer Position angeordnet ist, die sich von der Höhenreferenzschablone (32) entlang der axialen Richtung weiter innen befindet, und sich nicht in thermischem Kontakt mit der Höhenreferenzschablone (32) befindet, wobei die Erwärmungsvorrichtung (31) geeignet ist, um auf unverfestigte Materialien zur Ausbildung der Distanzstücke gedrückt zu werden, die auf die Außenumfangsoberfläche (7s) des Wabensegments (10) aufgebracht sind, wobei die Referenzhöhe der Höhenreferenzschablone (32) als Referenz verwendet wird, wodurch die Materialien zur Ausbildung der Distanzstücke verfestigt werden.

5. Vorrichtung (30) zur Ausbildung von Distanzstücken nach Anspruch 4, worin die Erwärmungsvorrichtung (31) Folgendes umfasst: einen Erwärmungsabschnitt (31 a), der das Material zur Ausbildung von Distanzstücken erhitzt, und einen Wärmeisolierungsabschnitt (31 b), der einstückig mit dem Erwärmungsabschnitt (31 a) ausgebildet ist und zwischen dem Erwärmungsabschnitt (31 a) und der Höhenreferenzschablone (32) vorliegt und verhindert, dass die Hitze des Erwärmungsabschnitts (31 a) auf die Höhenreferenzschablone (32) übertragen wird.

6. Vorrichtung (30) zur Ausbildung von Distanzstücken nach Anspruch 5, worin der Wärmeisolierungsabschnitt (31 b) eine Innenoberfläche (32u) der Höhenreferenzschablone (32) berührt, damit die Erwärmungsvorrichtung (31) entlang der Innenoberfläche (32u) der Höhenreferenzschablone (32) verschoben werden kann.

## Revendications

1. Procédé de fabrication d'un segment en nid d'abeilles (10) avec des espaceurs (11), comprenant les étapes consistant à : appliquer des matériaux de formage d'espaceur non solidifiés afin de former des espaceurs (11) sur une surface périphérique externe (7s) d'une paroi périphérique externe (7) à partir d'un côté d'extrémité des deux faces d'extrémité internes (8) dans une direction axiale vers l'intérieur le long de la direction axiale d'un segment en nid d'abeilles (10), vers une surface périphérique externe (7s) de la paroi périphérique externe (7) à partir de l'autre côté d'extrémité dans la direction axiale vers l'intérieur le long de la direction axiale du segment en nid d'abeilles (10), le segment en nid d'abeilles (10) ayant une pluralité d'alvéoles (3) définies par des parois de séparation poreuses (2), s'étendant dans la direction axiale et fonctionnant comme des passages de fluide ; et solidifier ensuite ledit matériau de formage d'espaceur pour former lesdits espaceurs (11) dans une hauteur prédéterminée, en utilisant, en tant que référence, une hauteur à partir de ladite surface périphérique externe (7s) de ladite paroi périphérique externe (7) auxdites positions des deux faces d'extrémité (8) dudit un côté d'extrémité et dudit autre côté d'extrémité dans ladite direction axiale.

2. Procédé de fabrication d'un segment en nid d'abeilles (10) avec des espaceurs (11) selon la revendication 1, comprenant en outre les étapes consistant à : après avoir appliqué lesdits matériaux de formage d'espaceur, comprimer un gabarit de référence de hauteur (32) représentant la hauteur de référence à partir de ladite surface périphérique externe (7s) contre ladite surface périphérique externe (7s) de ladite paroi périphérique externe (7) aux positions desdites deux faces d'extrémité (8) dudit un côté d'extrémité et dudit autre côté d'extrémité dans ladite direction axiale ; et comprimer un dispositif chauffant (31) contre lesdits matériaux de formage d'espaceur en utilisant ladite hauteur de référence dudit gabarit de référence de hauteur (32) en tant que référence afin de solidifier lesdits matériaux de formage d'espaceur, dans un état sans contact thermique avec ledit gabarit de référence de hauteur (32), formant ainsi lesdits espaceurs (11) sur une hauteur prédéterminée.

3. Procédé de fabrication d'un segment en nid d'abeilles (10) avec des espaceurs (11) selon la revendication 2, comprenant en outre l'étape consistant à : après avoir comprimé ledit gabarit de référence de hauteur (32) contre ladite surface périphérique externe (7s), comprimer ledit dispositif chauffant (31) contre lesdits matériaux de formage d'espaceur de sorte qu'une face d'extrémité (32s) dudit gabarit de référence de hauteur (32) d'un côté opposé au côté de ladite surface périphérique externe (7s) et qu'une face d'extrémité (31s) dudit dispositif chauffant (31) d'un côté opposé au côté de ladite surface périphérique externe (7s) sont de niveau entre elles.

4. Dispositif de formage d'espaceur (30) pour former des espaceurs (11) sur un segment en nid d'abeilles (10), comprenant :
un gabarit de référence de hauteur (32) ayant une longueur correspondant à une longueur dans une direction axiale du segment en nid d'abeilles (10) sur lequel les espaceurs (11) doivent être formés, le segment en nid d'abeilles (10) ayant une pluralité d'alvéoles (3) définies par des parois de séparation poreuses (2), s'étendant dans la direction axiale, et fonctionnant comme des passages de fluide, le gabarit de référence de hauteur (32) ayant une hauteur de référence prédéterminée, et étant approprié pour appuyer contre une surface périphérique externe (7s) d'une paroi périphérique externe (7) dudit segment en nid d'abeilles (10) dans les positions des deux faces d'extrémité (8) d'un côté d'extrémité et de l'autre côté d'extrémité, dans leur direction axiale ; et
un dispositif chauffant (31) positionné dans une position à partir du gabarit de référence de hauteur (32) vers l'intérieur le long de ladite direction axiale, dans un état sans contact thermique avec ledit gabarit de référence de hauteur (32), étant approprié pour appuyer contre le matériau de formage d'espaceur non solidifié appliqué sur ladite surface périphérique externe (7s) dudit segment en nid d'abeilles (10) en utilisant ladite hauteur de référence dudit gabarit de référence de hauteur (32) en tant que référence, et solidifiant ainsi les matériaux de formage d'espaceur.

5. Dispositif de formage d'espaceur (30) selon la revendication 4, dans lequel ledit dispositif chauffant (31) comprend : une partie chauffante (31a) chauffant ledit matériau de formage d'espaceur ; et une partie d'isolation thermique (31b) intégrée avec la partie chauffante (31a), étant positionnée entre ladite partie chauffante (31a) et ledit gabarit de référence de hauteur (32), et empêchant la conduction de la chaleur de ladite partie chauffante (31a) vers ledit gabarit de référence de hauteur (32).

6. Dispositif de formage d'espaceur (30) selon la revendication 5, dans lequel ladite partie d'isolation thermique (31b) est en contact avec une surface interne (32u) dudit gabarit de référence de hauteur (32) pour permettre audit dispositif chauffant (31) de coulisser le long de ladite surface interne (32u) dudit gabarit de référence de hauteur (32).
